# FASCICULE DE BREVET EUROPEEN

(11) **EP 3 935 655 B1**
(45) Date de publication et mention de la délivrance du brevet: **07.06.2023**
(21) Numéro de dépôt: 20708058.1
(22) Date de dépôt: 26.02.2020
(51) Int. Cl.: H01F 3/06, H01F 38/30, H01F 38/14, H02J 50/10

(54) **DISPOSITIF DE RECUPERATION D'ENERGIE SUR AU MOINS UN CONDUCTEUR DE PUISSANCE ET PROCEDE DE FABRICATION DUDIT DISPOSITIF DE RECUPERATION**
ENERGIERÜCKGEWINNUNGSVORRICHTUNG AUF MINDESTENS EINEM STROMLEITER UND VERFAHREN ZUR HERSTELLUNG DER RÜCKGEWINNUNGSVORRICHTUNG
ENERGY RECOVERY DEVICE ON AT LEAST ONE POWER CONDUCTOR AND METHOD FOR MANUFACTURING THE RECOVERY DEVICE

(30) Priorité: 07.03.2019 FR 1902317
(43) Date de publication de la demande: 12.01.2022
(73) Titulaire: Socomec, 67230 Benfeld (FR)
(72) Inventeur: GAUTARD, Dominique, 58640 VARENNES VAUZELLES (FR); SAVE, Thierry, 58660 COULANGES LES NEVERS (FR)
(74) Mandataire: Cabinet Laurent & Charras
(86) Numéro de dépôt international: PCT/EP2020/054956
(87) Numéro de publication internationale: WO 2020/178084

(56) Documents cités:
- EP-A1- 0 999 565
- WO-A1-2014/026300
- FR-A1- 2 784 496

## Description

### Domaine technique

La présente invention concerne un dispositif de récupération d'énergie électrique comportant au moins un câble ferromagnétique, enroulé en spirale autour d'au moins une portion d'un conducteur de puissance pour former un système magnétique apte à capter le champ magnétique induit par un courant traversant ledit conducteur de puissance, et des moyens pour générer à partir de ce champ magnétique une tension induite exploitable.

L'invention concerne également un procédé de fabrication d'un dispositif de récupération tel que défini ci-dessus.

### Technique antérieure

De plus en plus de capteurs, de systèmes ou d'accessoires sont implantés sur les réseaux électriques pour assurer des fonctions de protection, de surveillance, de comptage, etc. Ces dispositifs ont, dans la plupart des cas, besoin d'être alimentés en énergie électrique. Une solution consiste à prélever cette énergie électrique sur les conducteurs de puissance dans lesquels circule un courant électrique à l'aide de dispositifs de récupération d'énergie basés sur le principe de l'auto induction, évitant ainsi le recours à une source d'énergie additionnelle (batterie, énergie renouvelable, etc.). Pour ce faire, un noyau magnétique est fixé autour d'un conducteur de puissance parcouru par un courant et formant un circuit primaire. Ce courant crée un champ magnétique radial autour du conducteur de puissance, qui induit la circulation d'un flux magnétique dans le noyau magnétique. Un bobinage électrique est enroulé autour de ce noyau magnétique pour former un circuit secondaire. Ainsi, le flux magnétique circulant dans le noyau magnétique induit une tension aux bornes de ce bobinage., La tension induite récupérée aux bornes de ce bobinage électrique permet d'autoalimenter différents types de dispositif, tels qu'à titre d'exemples un ou plusieurs capteurs de température, de position, de courant, d'usure, etc., un ou plusieurs éléments d'éclairage, de signalisation, de communication, etc. sans que ces exemples ne soient limitatifs.

A ce jour, on connaît deux solutions de récupération d'énergie. L'une des solutions consiste en un noyau magnétique de type torique, fermé ou ouvrant, bobiné qui vient se fixer sur le conducteur de puissance. La solution d'un tore ouvrant est majoritairement retenue car elle permet de mettre en place un dispositif de récupération facilement, y compris sur des conducteurs de puissance de grandes longueurs. L'autre des solutions consiste en un noyau magnétique sous forme d'un câble ferromagnétique, sur lequel est bobiné un fil de cuivre. Ce câble ferromagnétique bobiné est spiralé autour du conducteur de puissance.

L'invention s'intéresse plus particulièrement à la solution du câble ferromagnétique, qui a l'avantage de pouvoir être mis en place plus facilement qu'un tore et ce quel que soit le type de configuration et le lieu d'installation des conducteurs de puissance. Toutefois, le diamètre extérieur de ce dispositif de récupération formé par le câble ferromagnétique sur lequel est enroulé le bobinage est augmenté, ce qui a pour effet de rigidifier le dispositif et de l'empêcher d'être enroulé autour de conducteurs de puissance de petit diamètre (typiquement inférieur à 20mm).

La publication WO 2014/026300 A1 décrit une application dans laquelle le récupérateur d'énergie alimente un ruban lumineux équipé de diodes électroluminescentes destiné au balisage d'un conducteur de puissance. Ce récupérateur d'énergie est constitué d'un câble ferromagnétique sur lequel est enroulé un bobinage de cuivre ou d'un autre matériau conducteur. La tension utile est récupérée aux bornes du bobinage pour autoalimenter le ruban lumineux.

La demande de brevet FR1850064 de la demanderesse décrit un tore souple et ouvrant, formé d'un câble ferromagnétique sur lequel est enroulé un bobinage de cuivre, constituant un transformateur de courant destiné à la détection des courants de défaut et/ou à la mesure du courant circulant dans le conducteur de puissance.

Dans ces deux cas, le dispositif de récupération d'énergie est constitué d'un noyau magnétique sous la forme d'un câble ferromagnétique et d'un bobinage extérieur d'un matériau électriquement conducteur enroulé autour de ce noyau magnétique. Le bobinage est généralement réalisé avec un fil conducteur (cuivre, aluminium, ou similaire) isolé et enroulé directement autour du noyau magnétique ou sur un support intermédiaire, sur une longueur suffisante pour générer la tension désirée.

Les dispositifs de récupération d'énergie existants ont un diamètre important et ne sont pas suffisamment souples pour pouvoir être enroulés autour de conducteurs de puissance de petits diamètres. Les solutions existantes ne permettent donc pas une intégration facile d'un dispositif de récupération d'énergie dans tout type d'installation et encore moins autour de tout type de conducteur de puissance.

### Présentation de l'invention

La présente invention vise à pallier ces inconvénients en proposant un procédé et un dispositif de récupération d'énergie qui permettent de s'affranchir du bobinage extérieur spiralé autour du câble ferromagnétique, dans le but de réduire son diamètre extérieur et de retrouver une souplesse suffisante pour pouvoir être enroulé sur tout type de conducteurs de puissance, quel que soit leur diamètre, afin d'assurer une intégration facile de ce dispositif dans tout type d'installation, et d'élargir ainsi son potentiel d'utilisation dans tout type d'applications nécessitant d'autoalimenter des systèmes électriques à partir d'au moins un conducteur de puissance.

Dans ce but, l'invention concerne un dispositif de récupération d'énergie du genre indiqué en préambule, caractérisé en ce que ledit au moins un câble ferromagnétique est constitué d'un ensemble de brins unitaires en matériau ferromagnétique, assemblés sous forme de toron et agencés pour conférer audit câble ferromagnétique une souplesse dans toutes les directions lui permettant d'être enroulé autour dudit conducteur de puissance quel que soit son diamètre, et en ce que lesdits moyens pour générer une tension induite font partie intégrante dudit au moins un câble ferromagnétique.

Ainsi, les moyens pour générer une tension induite sont compris dans le diamètre du câble ferromagnétique et ne pénalisent ni son encombrement, ni sa souplesse.

Dans une première forme de réalisation, ces moyens comportent au moins un brin unitaire en matériau électriquement conducteur, assemblé avec lesdits brins unitaires en matériau ferromagnétique, pour constituer ledit au moins un câble ferromagnétique. Dans ce cas, ledit au moins un brin unitaire électriquement conducteur constitue un bobinage dans lequel est générée ladite tension induite et comporte à ses extrémités des bornes de raccordement permettant de récupérer ladite tension induite.

Dans une seconde forme de réalisation, ces moyens sont confondus avec ledit au moins un câble ferromagnétique, chaque brin unitaire en matériau ferromagnétique se comportant comme un bobinage dans lequel est générée ladite tension induite. Dans ce cas, lesdits brins unitaires forment un ensemble de bobinages raccordés en parallèle par des bornes de raccordement fixées aux extrémités dudit au moins câble ferromagnétique permettant de récupérer ladite tension induite.

Dans une forme préférée de l'invention, lesdits brins unitaires sont assemblés en torons intermédiaires, et lesdits torons intermédiaires sont assemblés en un toron final pour constituer ledit au moins un câble ferromagnétique. Lesdits brins unitaires et lesdits torons intermédiaires sont avantageusement toronnés dans un même sens de rotation.

Le nombre total de brins unitaires constituant ledit au moins un câble ferromagnétique est avantageusement un multiple de trois et le diamètre des brins unitaires est préférentiellement inférieur au millimètre, et de préférence inférieur à 0.5mm.

Selon les applications, le matériau ferromagnétique desdits brins unitaires peut être un matériau à haute perméabilité magnétique relative, choisi parmi les alliages de Fer-Nickel avec au moins 70% de Nickel, et de préférence 78 à 81% de Nickel, ou un matériau avec une moins bonne perméabilité magnétique relative mais avec une saturation d'induction supérieure ou égale à 1,5 Tesla, choisi parmi les alliages de Fer-Nickel avec au plus 55% de Nickel, les alliages à base de fer.

En fonction des variantes de réalisation de l'invention, lesdits brins unitaires peuvent être isolés électriquement les uns des autres, ou non.

Si les brins unitaires ne sont pas isolés électriquement les uns des autres, alors tous les brins unitaires contenus dans ledit au moins un câble ferromagnétique doivent présenter une même forme et parcourir un même chemin de sorte à embrasser une même section dudit câble ferromagnétique pour qu'ils soient tous au même potentiel et qu'aucun courant ne circule d'un brin unitaire à l'autre.

Dans la forme préférée, lesdites bornes de raccordement sont serties sur les extrémités dudit câble ferromagnétique pour connecter tous les brins unitaires en parallèle.

Dans ce but également, l'invention concerne un procédé de fabrication du genre indiqué en préambule, caractérisé en ce que l'on fabrique ledit au moins un câble ferromagnétique à partir d'un ensemble de brins unitaires en matériau ferromagnétique par un procédé de toronnage pour assembler lesdits brins unitaires entre eux sous la forme de toron, et en ce que l'on intègre lesdits moyens pour générer une tension induite dans ledit au moins un câble ferromagnétique lors de sa fabrication.

### Brève description des figures

La présente invention et ses avantages apparaîtront mieux dans la description suivante de plusieurs modes de réalisation donnés à titre d'exemples non limitatifs, en référence aux dessins annexés, dans lesquels:
[Fig 1] la figure 1 est une vue en perspective d'un dispositif de récupération d'énergie selon l'invention pourvu d'un câble ferromagnétique enroulé autour d'une portion d'un conducteur de puissance,
[Fig 2] la figure 2 est un schéma montrant les étapes de fabrication du dispositif de récupération d'énergie selon une première variante de réalisation,
[Fig 3] la figure 3 est une vue agrandie d'un tronçon du dispositif de récupération d'énergie selon une seconde variante de réalisation,
[Fig 4] la figure 4 est une vue similaire à la figure 1 d'un dispositif de récupération d'énergie pourvu de deux câbles ferromagnétiques raccordés en série et enroulés autour d'une portion d'un conducteur de puissance, montrant les bornes de raccordement situées d'un même côté du dispositif, et
[Fig 5] la figure 5 représente les diagrammes des tensions du dispositif de la figure 4.

### Description détaillée de l'invention

Dans les exemples de réalisation illustrés, les éléments ou parties identiques portent les mêmes numéros de référence.

En référence aux figures, le dispositif de récupération 1 d'énergie électrique selon l'invention comporte au moins un câble ferromagnétique 2, enroulé en spirale autour d'une portion 3 d'un conducteur de puissance 4, ce dernier étant électriquement isolé par une gaine 5 et traversé par un courant I1, appelé aussi courant primaire I1. Le câble ferromagnétique 2 forme ainsi un circuit magnétique ou un système magnétique apte à capter le champ magnétique induit par le courant primaire I1 traversant le conducteur de puissance 4.

Le câble ferromagnétique 2 est avantageusement constitué d'un ensemble de brins unitaires 20 en matériau ferromagnétique, assemblés sous forme de toron. Ce type de construction permet de conférer audit câble ferromagnétique 2 une souplesse dans toutes les directions facilitant son enroulement autour d'un conducteur de puissance 4 quel que soit son diamètre, même les plus petits diamètres, selon bien entendu le diamètre extérieur dudit câble. On peut par exemple utiliser la règle suivante : le diamètre du conducteur de puissance 4 additionné de sa gaine isolante 5 peut être au moins égal à deux fois le diamètre du câble ferromagnétique 2 (Φ4 ≥ 2 × Φ2), sans toutefois que cette règle ne soit limitative.

Le dispositif de récupération 1 comporte en outre des moyens 10 pour générer à partir de ce champ magnétique une tension induite U2 qui est exploitable. On entend par « tension exploitable » une tension suffisante permettant soit d'autoalimenter un ou plusieurs systèmes électriques tels qu'à titre d'exemples non limitatifs un ou plusieurs capteurs de température, de position, de courant, d'usure, etc., un ou plusieurs éléments d'éclairage, de signalisation, de communication, etc., soit de fournir une image du courant primaire I1 ou de détecter des courants de fuite dans une installation électrique, sans que ces exemples d'application ne soient limitatifs. A titre d'exemple, la tension exploitable doit être au moins égale à 3 Volts, sans que cette valeur ne soit limitative.

A la différence des dispositifs de récupération de l'art antérieur, les moyens permettant de générer une tension induite exploitable ne sont pas constitués par un bobinage de cuivre extérieur, enroulé en spirale autour dudit câble ferromagnétique, mais font partie intégrante dudit câble ferromagnétique 2. Ainsi, ils ne pénalisent ni le diamètre extérieur, ni la souplesse du câble ferromagnétique.

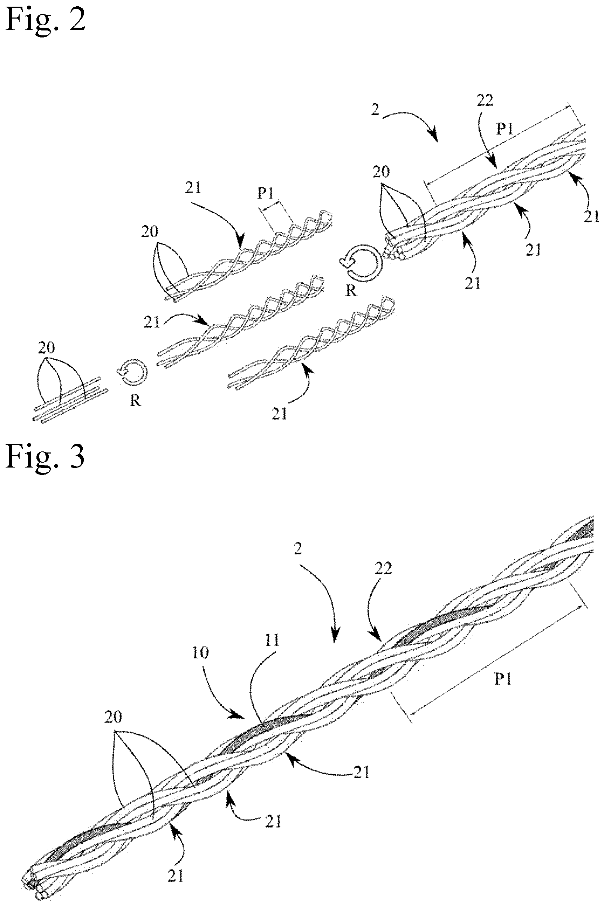

Dans une première variante de réalisation de l'invention illustrée à la figure 3, les moyens 10 pour générer une tension induite U2 comportent au moins un brin unitaire 11 en matériau électriquement conducteur, isolé électriquement, et assemblé avec les autres brins unitaires 20 en matériau ferromagnétique, pour constituer ledit câble ferromagnétique 2. Dans ce cas, le brin unitaire 11 conducteur, qui peut être constitué d'au moins un fil de cuivre ou similaire, constitue un bobinage dans lequel est générée la tension induite U2 et comporte à ses extrémités des bornes de raccordement (non représentées) permettant de récupérer ladite tension induite U2. Ce brin unitaire 11 conducteur peut remplacer un des autres brins unitaires 20 en matériau ferromagnétique, comme illustré à la figure 3. Bien entendu, le nombre de brins unitaires 11 conducteurs peut être supérieur à un, et son agencement au sein du câble ferromagnétique 2 peut différer, l'essentiel étant qu'il soit intégré lors de la fabrication dudit câble. Le procédé de fabrication dudit câble ferromagnétique 2 peut correspondre à celui qui est décrit ci-après en référence à la seconde variante de réalisation de l'invention.

Dans une seconde variante de réalisation de l'invention illustrée par les autres figures, les moyens pour générer une tension induite U2 sont confondus avec ledit câble ferromagnétique 2. Le courant primaire I1 qui circule dans le conducteur de puissance 4 induit un flux magnétique dans l'ensemble des brins unitaires 20 qui constituent le câble. Il a été découvert de manière fortuite que, selon la façon dont sont enroulés les brins unitaires 20 les uns autour des autres, chaque brin unitaire 20 embrasse une certaine fraction de la section totale du câble ferromagnétique 2 et se comporte comme un bobinage dans lequel est induite une tension. Ainsi, l'ensemble des brins unitaires 20 forment un ensemble de bobinages raccordés en parallèle par des bornes de raccordement 6 prévues aux extrémités dudit câble ferromagnétique 2 et entre lesquelles une tension induite U2 est présente.

Cette forme de réalisation va à l'encontre d'un préjugé, car l'homme du métier n'est pas incité à utiliser des matériaux ferromagnétiques comme conducteurs électriques. En effet, il sait que les matériaux ferromagnétiques sont de moins bons conducteurs d'électricité que le cuivre, qu'ils sont plus résistifs et qu'ils génèrent des pertes par effet Joules.

Or, des essais ont démontré que le niveau de tension induite U2 présente aux extrémités du câble ferromagnétique 2 peut être suffisant pour les applications envisagées, et qu'il dépend de plusieurs paramètres et notamment de la façon dont sont toronnés les brins unitaires 20, du nombre de brins unitaires 20, de la section totale du câble ferromagnétique 2, de la longueur du pas P1 de toronnage des brins unitaires 20 et du pas d'enroulement P2 du câble ferromagnétique 2 autour du conducteur de puissance 4. En outre, ce niveau de tension induite U2 est proportionnel à la longueur du câble ferromagnétique 2, et dépend également du choix de la matière ferromagnétique constituant les brins unitaires 20.

### La matière ferromagnétique

Pour une partie des conditions d'usage dudit dispositif de récupération d'énergie 1 (réseau domestique, charge de faible puissance dans un bâtiment, ou similaire), on cherche à générer un niveau de tension induite U2 maximum avec un courant primaire I1 dans le conducteur de puissance 4 le plus faible possible, de l'ordre de quelques ampères (par exemple 10 A). Le matériau ferromagnétique utilisé pour les brins unitaires 20 doit, pour cela, avoir une perméabilité magnétique relative élevée, de l'ordre de quelques milliers. Les alliages de type Fer-Nickel avec au moins 70% de Nickel, et de préférence 78 à 81% de Nickel, sont alors privilégiés.

Pour d'autres conditions d'usage dudit dispositif de récupération d'énergie 1 (industrie lourde, mines, ou similaire), dans lesquelles le courant primaire I1 dans le conducteur de puissance 4 est toujours à un niveau élevé, au minimum quelques dizaines d'ampères, il est possible d'utiliser un matériau ferromagnétique avec une perméabilité magnétique relative moins élevée mais avec une induction à saturation plus forte (par exemple supérieure ou égale à 1,5 Tesla), tels que les alliages de type Fer-Nickel avec au plus 55% de Nickel, et les autres alliages à base de fer. En effet, le courant primaire I1 est suffisant pour saturer le matériau ferromagnétique avec une perméabilité moins élevée que celle de l'alliage Fer-Nickel 80%, et la saturation élevée dudit matériau a pour effet d'augmenter la tension induite U2.

### La structure du câble

Le câble ferromagnétique 2 est constitué d'une pluralité de brins unitaires 20 de diamètre suffisamment faible pour garder une bonne souplesse : typiquement de quelques centièmes de millimètres à quelques millimètres, notamment de 0.10mm à 0.40mm, et préférentiellement de 0.2mm, sans que ces valeurs ne soient limitatives. Le nombre de brins unitaires 20 est ajusté de façon à obtenir une section totale de matériau ferromagnétique nécessaire à l'obtention de la tension induite U2 recherchée. Ces brins unitaires 20 sont toronnés ensemble soit en un seul toron pour les sections de câble faibles (par exemple moins de 2 mm²), soit en plusieurs torons intermédiaires 21 pour les autres. Les brins unitaires 20 et les torons intermédiaires 21 dans un même câble ferromagnétique 2 doivent être impérativement enroulés dans un même sens de rotation (horaire ou antihoraire) afin que les tensions induites ne s'annulent pas.

Les brins unitaires 20 peuvent être isolés les uns des autres. Ils peuvent aussi être non isolés les uns des autres. Dans ce dernier cas, ils sont en contact permanent les uns avec les autres et pourraient donc créer des court-circuits. Pour éviter cela, le gradient de tension doit être nul dans chaque section du câble ferromagnétique 2, et ce quelle que soit sa position sur le conducteur de puissance 4. Dans ces conditions, il n'y a pas de différence de potentiel entre les brins unitaires 20 et aucun courant ne peut circuler d'un brin unitaire à l'autre.

Pour obtenir ce résultat, tous les brins unitaires 20 contenus dans un câble ferromagnétique 2 doivent avoir une même forme pour parcourir un même chemin et embrasser une même section tout au long du câble ferromagnétique 2.

Les paramètres de toronnage des différents torons intermédiaires 21, constitués par le pas P1 de toronnage et le nombre de brins unitaires 20, doivent permettre de satisfaire cette condition tout en respectant le plus possible les règles de l'art en matière de fabrication des câbles toronnés.

### Le nombre de brins

L'objectif recherché est de fabriquer un câble ferromagnétique 2 composé du plus grand nombre de brins unitaires 20 avec le moins de torons intermédiaires 21 possible pour conserver une souplesse au câble.

Pour être sûr que tous les brins unitaires 20 aient la même forme, c'est-à-dire qu'ils soient tous vrillés ou tordus de manière identique, seules des combinaisons de deux, trois ou quatre brins unitaires 20 sont théoriquement possibles. Au-delà de quatre brins unitaires 20, il y a au moins un brin unitaire 20, à savoir celui situé au centre, qui reste droit ou qui ne décrit pas le même parcours que les autres. La combinaison avec quatre brins ne convient que si les brins unitaires 20 sont bien disposés l'un par rapport à l'autre en carré, mais est difficile voire impossible à industrialiser. Les combinaisons avec deux ou trois brins unitaires 20 sont privilégiées, et celle avec trois brins unitaires 20 représente la combinaison préférée. Cette règle théorique des trois brins peut ne pas être respectée dans le cadre d'une fabrication industrielle si les résultats obtenus restent satisfaisants, comme démontré plus loin.

En référence plus particulièrement à la figure 2, la fabrication d'un câble ferromagnétique 2 avec la combinaison préférée, nécessite au moins les deux étapes suivantes :
- Première étape : prendre trois brins unitaires 20 parallèles et les toronner ensemble dans un sens symbolisé par la flèche R pour former un premier toron intermédiaire 21, puis recommencer deux fois la même opération pour former deux autres torons intermédiaires 21, chacun obtenu à partir de trois brins unitaires 20,
- Deuxième étape : toronner ensemble les trois torons intermédiaires 21 obtenus dans un même sens symbolisé par la flèche R pour obtenir un toron final qui forme ledit câble ferromagnétique 2.

Bien entendu, ce nombre d'étapes n'est pas limité à deux mais peut comprendre N étapes jusqu'à obtenir le nombre de brins unitaires 20 et la section du système magnétique souhaités. On privilégie alors un nombre de brins unitaires 20 qui est un multiple de 3. Plus le nombre de brins unitaires 20 est élevé et plus la surface de captage du champ magnétique induit par le courant primaire I1 traversant le conducteur de puissance 4 est grande et plus le niveau de tension induite U2 sera important.

Les essais ont montré qu'il faut environ une centaine de brins unitaires 20 d'un diamètre de 0.1mm à 0.4mm, préférentiellement 0.2mm, pour obtenir une section du câble ferromagnétique 2 permettant d'atteindre un niveau de tension induite U2 suffisant. Cette constatation impliquerait de fabriquer le câble en quatre étapes pour assembler 3 × 3 × 3 × 4, soit 108 brins unitaires 20, ce qui est difficilement réalisable industriellement et coûteux. Les essais ont également permis d'observer que ce sont les paramètres des derniers torons intermédiaires 21 (les plus gros) qui sont les plus importants. On peut donc se permettre de ne pas respecter la règle théorique des trois brins sur les torons intermédiaires 21 de niveau 1. Les essais ont enfin permis de démontrer qu'il est possible d'augmenter le nombre de brins unitaires 20 jusqu'à douze dans les torons intermédiaires 21 de niveau 1. Au-delà de ce nombre de brins, le niveau de tension induite U2 dans le câble ferromagnétique 2 diminue.

Pour illustrer les combinaisons possibles, on peut citer à titre d'exemple non limitatif, le mode de réalisation industrielle suivant :
- Première étape : prendre douze brins unitaires 20 parallèles et les toronner ensemble dans un sens de rotation pour former un premier toron intermédiaire 21 de niveau 1, puis recommencer huit fois la même opération pour former huit autres torons intermédiaires 21 de niveau 1, chacun obtenu à partir de douze brins unitaires 20,
- Deuxième étape : toronner ensemble les trois torons intermédiaires 21 de niveau 2 obtenus dans le même sens de rotation, puis recommencer deux fois la même opération pour former deux autres torons intermédiaires 21 de niveau 2, chacun obtenu à partir de trois torons intermédiaires 21 de niveau 1,
- Troisième étape : toronner ensemble les trois torons intermédiaires 21 de niveau 2 obtenus dans le même sens de rotation, pour obtenir un toron final qui forme ledit câble ferromagnétique 2 contenant au total cent huit brins unitaires.

### Le pas de toronnage

Le paramètre de toronnage qui influence de façon importante le niveau de tension induite U2 est le pas P1 du toron ou pas P1 de toronnage. Dans un câble ferromagnétique 2 constitué de plusieurs torons intermédiaires 21, il faut prendre en compte le pas P1 de chaque toron intermédiaire 21, représenté schématiquement sur la figure 2. Le fait de réduire le pas P1 augmente le nombre de tours par unité de longueur et par conséquent le nombre de spires de bobinage équivalent. Ce résultat a pour effet d'augmenter le niveau de tension induite U2. Mais la longueur du pas P1 doit cependant respecter le plus possible les règles de l'art en matière de fabrication des câbles toronnés, pour conserver une bonne flexibilité du câble et pour éviter les trop fortes déformations des brins et les risques de cassures. A titre indicatif, les règles de l'art suggèrent que la longueur du pas P1 mini ne soit pas inférieure à cinq fois le diamètre du câble obtenu après toronnage (P1mini ≥ 5 × Φ câble fini). Dans le cadre de l'invention et pour augmenter la tension induite U2, on choisira des paramètres de toronnage qui respectent cette limite basse, voire qui se situeront au-dessous de cette limite basse.

### L'enroulement sur le conducteur de puissance

Les paramètres de l'enroulement du câble ferromagnétique 2 autour du conducteur de puissance 4 ont également une influence sur la phase et le niveau de tension induite U2.

Si le sens de toronnage du câble ferromagnétique 2 est le même que le sens de l'enroulement sur le conducteur de puissance 4, la tension induite U2 sera en phase avec le courant primaire I1. Si le sens de toronnage du câble ferromagnétique 2 est inversé par rapport au sens de l'enroulement sur le conducteur de puissance 4, la tension induite U2 sera en opposition de phase avec le courant primaire I1.

De plus, il a été constaté que pour une valeur de courant primaire I1 donnée, la tension induite U2 aux extrémités d'un câble ferromagnétique 2 est légèrement supérieure, si le sens de toronnage du câble ferromagnétique 2 est le même que le sens de l'enroulement sur le conducteur de puissance 4, que si les sens sont inversés. On privilégiera alors un sens de toronnage identique au sens de l'enroulement.

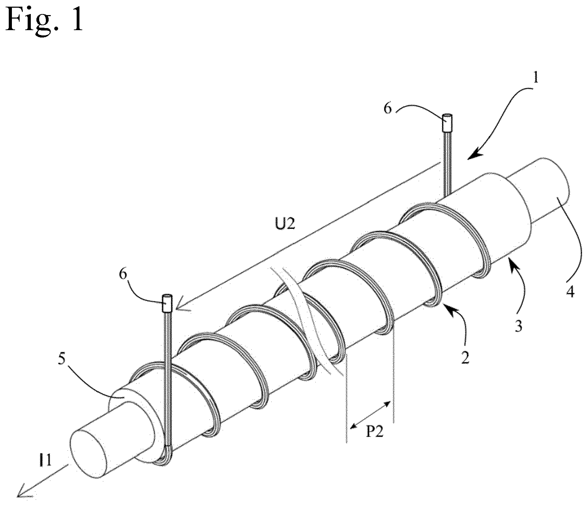

Enfin, plus le pas P2 d'enroulement (fig. 1) sera faible plus la tension induite U2 sera élevée. Pour des conditions d'usage ou des procédés de fabrication dans lesquels le câble ferromagnétique 2 est enroulé en spirale sur un conducteur de puissance 4 de grande longueur, le pas P2 d'enroulement ne devra pas être supérieur à trois fois le diamètre du conducteur de puissance 4 (P2 ≤ 3 × Φ4).

### La longueur du câble

La tension induite U2 disponible aux extrémités du câble ferromagnétique 2 est proportionnelle à la longueur de ce câble. Pour obtenir une tension induite U2 suffisante, par exemple une tension égale à au moins 3 Volts, plusieurs mètres de câble seront nécessaires. La distance entre les bornes de raccordement pour récupérer cette tension induite U2 sera donc également de plusieurs mètres, ce qui peut poser des problèmes d'exploitation. Différentes solutions ont été étudiées pour ramener les deux bornes de raccordement 6 côte à côte.

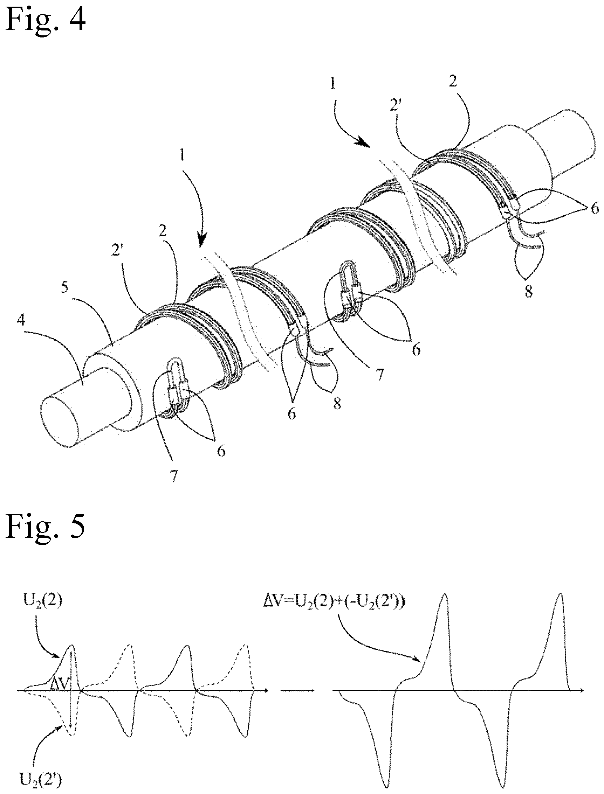

La figure 4 illustre une des solutions dans laquelle le dispositif de récupération 1 comporte deux câbles ferromagnétiques 2, 2', un premier câble faisant un trajet « aller » et un second câble faisant un trajet « retour » sur ledit conducteur de puissance 4. On a représenté sur cette figure 4, deux dispositifs de récupération d'énergie 1 indépendants ou mis en série et répartis sur la longueur d'un conducteur de puissance 4 de grande longueur. Dans cette solution, les deux câbles ferromagnétiques 2, 2' d'un même dispositif de récupération 1 sont identiques, doivent être impérativement toronnés en sens inverses, sont connectés en série par un pontage 7 et sont enroulés en parallèle sur le conducteur de puissance 4. Les extrémités libres de ces deux câbles ferromagnétiques 2, 2', comportant chacune une borne de raccordement 6, se rejoignent d'un même côté du dispositif de récupération 1, et peuvent être ainsi facilement connectées pour autoalimenter un dispositif électrique ou faire de la mesure et/ou de la détection de courant. La mise en série de ces deux câbles ferromagnétiques 2, 2' permet d'additionner les tensions induites U2. Ainsi, et comme l'illustre la figure 5, la tension totale récupérée entre les bornes de raccordement 6 correspond au double de la valeur de la tension induite U2 dans un seul câble ferromagnétique 2.

Une autre solution (non représentée) consiste à remplacer le second câble ferromagnétique 2' par au moins un fil ou brin unitaire en matériau électriquement conducteur pour faire le trajet « retour ». Dans ce cas et comme dans l'exemple précédent, le câble ferromagnétique 2 et le fil retour sont connectés en série et sont enroulés en parallèle sur le conducteur de puissance 4. Les extrémités libres respectivement du câble ferromagnétique 2 et du fil retour comportent chacune une borne de raccordement qui se rejoignent d'un même côté du dispositif de récupération 1.

Dans la variante de réalisation de l'invention où les brins unitaires 20 ne sont pas isolés individuellement, tous ces brins sont au même potentiel en un point donné. Les bornes de raccordement 6 devront permettre de les relier tous ensemble à un conducteur pour autoalimenter un système électrique ou faire de la détection de courant. On pourra utiliser des bornes de raccordement 6 sous la forme de manchons tubulaires sertis d'un côté sur les extrémités du câble ferromagnétique 2 pour serrer les brins unitaires 20 les uns contre les autres et ainsi assurer les contacts électriques et la tenue mécanique des torons intermédiaires 21, et de l'autre côté sur les fils conducteurs 8 assurant la liaison électrique avec le dispositif électrique à alimenter. Tous les brins unitaires 20 sont ainsi mis en parallèle de façon à constituer un conducteur de section importante. Cette solution est rapide, simple et économique. Elle peut être étendue à la réalisation du pontage 7 pour mettre en série les câbles ferromagnétiques 2, 2' en référence à la figure 4. Bien entendu, tout autre type de borne de raccordement remplissant les mêmes fonctions est possible.

Le dispositif de récupération 1 qui vient d'être décrit peut être fixé au conducteur de puissance 4 par tout moyen technique connu et adapté, tel que par adhérence, collage, sertissage, etc. ou encore par ajout d'une gaine de protection thermo rétractable ou similaire.

Il ressort clairement de cette description que l'invention permet d'atteindre les buts fixés, à savoir une nouvelle génération de dispositifs récupérateurs d'énergie performants, polyvalents et économiques, sans bobinage secondaire extérieur, grâce à un câble ferromagnétique 2 répondant à une construction très spécifique qui lui permet d'assurer à lui seul une double fonction : celle d'un noyau magnétique et celle d'un bobinage secondaire. Ainsi, l'invention offre une solution d'auto alimentation pour tout dispositif électrique à moindre coût, mais également une solution de détection alternative aux capteurs de courant traditionnels.

En effet, 1a valeur de 1a tension induite U2 aux extrémités du câble ferromagnétique 2 est une image plus ou moins précise du courant primaire I1 qui circule dans le conducteur de puissance 4 sur lequel ce câble est enroulé en spirale. Il est donc possible d'utiliser ce dispositif de récupération 1 pour réaliser des capteurs de courant permettant 1a mesure du courant primaire I1 ou 1a détection de courants de fuite.

La présente invention n'est bien entendu pas limitée aux exemples de réalisation décrits mais s'étend à toute modification et variante évidentes pour un homme du métier dans 1a limite des revendications annexées. Notamment les paramètres de construction du câble ferromagnétique 2 peuvent varier en fonction des applications visées.

## Revendications

1. Dispositif de récupération (1) d'énergie électrique comportant au moins un câble ferromagnétique (2, 2'), enroulé en spirale autour d'au moins une portion (3) d'un conducteur de puissance (4) pour former un système magnétique apte à capter le champ magnétique induit par un courant (I1) traversant ledit conducteur de puissance (4), et des moyens pour générer à partir de ce champ magnétique une tension induite (U2) exploitable, **caractérisé en ce que** ledit au moins un câble ferromagnétique (2, 2') est constitué d'un ensemble de brins unitaires (20) en matériau ferromagnétique, assemblés sous forme de toron et agencés pour conférer audit câble ferromagnétique (2, 2') une souplesse dans toutes les directions lui permettant d'être enroulé autour dudit conducteur de puissance (4) quel que soit le diamètre dudit conducteur de puissance, et **en ce que** lesdits moyens pour générer une tension induite (U2) font partie intégrante dudit au moins un câble ferromagnétique (2, 2').

2. Dispositif de récupération selon la revendication 1, **caractérisé en ce que** lesdits moyens (10) pour générer une tension induite (U2) comportent au moins un brin unitaire (11) en matériau électriquement conducteur, assemblé avec lesdits brins unitaires (20) en matériau ferromagnétique, pour constituer ledit au moins un câble ferromagnétique (2), et **en ce que** ledit au moins un brin unitaire (11) électriquement conducteur constitue un bobinage dans lequel est générée ladite tension induite (U2) et comporte à ses extrémités des bornes de raccordement permettant de récupérer ladite tension induite.

3. Dispositif de récupération selon la revendication 1, **caractérisé en ce que** lesdits moyens pour générer une tension induite (U2) sont confondus avec ledit au moins un câble ferromagnétique (2, 2'), **en ce que** chaque brin unitaire (20) en matériau ferromagnétique se comporte comme un bobinage dans lequel est générée ladite tension induite (U2), et **en ce que** lesdits brins unitaires (20) forment un ensemble de bobinages raccordés en parallèle par des bornes de raccordement (6) fixées aux extrémités dudit au moins câble ferromagnétique (2, 2') permettant de récupérer ladite tension induite.

4. Dispositif de récupération selon l'une quelconque des revendications 2 et 3, **caractérisé en ce que** lesdits brins unitaires (20) sont assemblés en torons intermédiaires (21), et **en ce que** lesdits torons intermédiaires (21) sont assemblés en un toron final (22) constituant ledit au moins un câble ferromagnétique (2).

5. Dispositif de récupération selon la revendication 4, **caractérisé en ce que** lesdits brins unitaires (20) et lesdits torons intermédiaires (21) sont toronnés dans un même sens de rotation.

6. Dispositif de récupération selon la revendication 4, **caractérisé en ce que** le nombre total de brins unitaires (20) constituant ledit au moins un câble ferromagnétique (2, 2') est un multiple de trois.

7. Dispositif de récupération selon la revendication 1, **caractérisé en ce que** le diamètre des brins unitaires (20) est inférieur au millimètre, et de préférence inférieur à 0.5mm.

8. Dispositif de récupération selon la revendication 1, **caractérisé en ce que** le matériau ferromagnétique desdits brins unitaires (20) est un matériau à haute perméabilité magnétique relative, choisi parmi les alliages de Fer-Nickel avec au moins 70% de Nickel, et de préférence 78 à 81% de Nickel.

9. Dispositif de récupération selon la revendication 1, **caractérisé en ce que** le matériau ferromagnétique desdits brins unitaires (20) est un matériau avec une moins bonne perméabilité magnétique relative, mais avec une saturation d'induction supérieure ou égale à 1,5 Tesla, choisi parmi les alliages de Fer-Nickel avec au plus 55% de Nickel, les alliages à base de fer.

10. Dispositif de récupération selon la revendication 1, **caractérisé en ce que** lesdits brins unitaires (20) sont isolés électriquement les uns des autres.

11. Dispositif de récupération selon la revendication 1, **caractérisé en ce que** lesdits brins unitaires (20) ne sont pas isolés électriquement les uns des autres.

12. Dispositif de récupération selon la revendication 11, **caractérisé en ce que** tous les brins unitaires (20) contenus dans ledit au moins un câble ferromagnétique (2, 2') présentent une même forme et parcourent un même chemin de sorte à embrasser une même section dudit câble ferromagnétique (2,2') pour qu'ils soient tous au même potentiel et qu'aucun courant ne circule d'un brin unitaire à l'autre.

13. Dispositif de récupération selon quelconque des revendications 2 et 3, **caractérisé en ce que** lesdites bornes de raccordement (6) sont serties sur les extrémités dudit câble ferromagnétique (2) pour connecter tous les brins unitaires (20, 11) en parallèle.

14. Procédé de fabrication d'un dispositif de récupération (1) d'énergie électrique selon l'une quelconque des revendications précédentes, ledit dispositif comportant au moins un câble ferromagnétique (2, 2'), agencé pour être enroulé en spirale autour d'au moins une portion (3) d'un conducteur de puissance (4) et former un dispositif magnétique apte à capter le champ magnétique induit par un courant (I1) traversant ledit conducteur de puissance (4), et des moyens pour générer à partir de ce champ magnétique une tension induite (U2) exploitable, **caractérisé en ce que** l'on fabrique ledit au moins un câble ferromagnétique (2, 2') à partir d'un ensemble de brins unitaires (20) en matériau ferromagnétique par un procédé de toronnage pour assembler lesdits brins unitaires (20) entre eux sous la forme de toron, et **en ce que** l'on intègre lesdits moyens pour générer une tension induite (U2) dans ledit au moins un câble ferromagnétique (2, 2') lors de sa fabrication.

15. Procédé de fabrication selon la revendication 14, **caractérisé en ce que** l'on utilise comme moyens (10) pour générer une tension induite (U2) au moins un brin unitaire (11) en matériau électriquement conducteur que l'on assemble par ledit procédé de toronnage avec lesdits brins unitaires (20) en matériau ferromagnétique pour constituer ledit au moins un câble ferromagnétique (2), de sorte que ledit au moins un brin unitaire (11) électriquement conducteur constitue un bobinage dans lequel est induite ladite tension induite (U2), et **en ce que** l'on équipe les extrémités dudit au moins un brin unitaire (11) de bornes de raccordement permettant de récupérer ladite tension induite.

16. Procédé de fabrication selon la revendication 14, **caractérisé en ce que** l'on utilise comme moyens pour générer une tension induite (U2) ledit au moins un câble ferromagnétique (2, 2') lui-même, de sorte chaque brin unitaire (20) en matériau ferromagnétique se comporte comme un bobinage dans lequel est induite ladite tension induite (U2), et **en ce que** l'on raccorde en parallèle l'ensemble desdits brins unitaires (20) formant un ensemble de bobinages par des bornes de raccordement (6) ajoutées aux extrémités dudit au moins câble ferromagnétique (2, 2') permettant de récupérer ladite tension induite.

17. Procédé de fabrication selon l'une quelconque des revendications 15 et 16, **caractérisé en ce que** l'on assemble lesdits brins unitaires (20) par ledit procédé de toronnage pour former des torons intermédiaires (21), et **en ce que** l'on assemblage lesdits torons intermédiaires (21) par ledit procédé de toronnage pour former un toron final (22) correspondant audit au moins un câble ferromagnétique (2).

18. Procédé de fabrication selon la revendication 17, **caractérisé en ce que** l'on toronne lesdits brins unitaires (20) et lesdits torons intermédiaires (21) dans un même sens de rotation.

19. Procédé de fabrication selon la revendication 17, **caractérisé en ce que** l'on utilise un nombre total de brins unitaires (20) qui est un multiple de trois pour fabriquer ledit au moins un câble ferromagnétique (2, 2').

20. Procédé de fabrication selon la revendication 14, **caractérisé en ce que** l'on choisit des brins unitaires (20) fins d'un diamètre inférieur au millimètre, et de préférence inférieure à 0.5mm.

21. Procédé de fabrication selon la revendication 14, **caractérisé en ce que** l'on utilise des brins unitaires (20) constitués d'un matériau à haute perméabilité magnétique relative, choisi parmi les alliages de Fer-Nickel avec au moins 70% de Nickel, et de préférence 78 à 81% de Nickel.

22. Procédé de fabrication selon la revendication 14, **caractérisé en ce que** l'on utilise des brins unitaires (20) constitués d'un matériau avec une moins bonne perméabilité magnétique relative, mais avec une saturation d'induction supérieure ou égale à 1,5 Tesla, choisi parmi les alliages de Fer-Nickel avec au plus 55% de Nickel, les alliages à base de fer.

23. Procédé de fabrication selon la revendication 14, **caractérisé en ce que** l'on utilise des brins unitaires (20) qui sont isolés électriquement les uns des autres.

24. Procédé de fabrication selon la revendication 14, **caractérisé en ce que** l'on utilise des brins unitaires (20) nus qui ne sont pas isolés électriquement les uns des autres.

25. Procédé de fabrication selon la revendication 24, **caractérisé en ce que**, dans le procédé de toronnage, l'on positionne les brins unitaires (20) les uns par rapport aux autres pour que tous les brins unitaires (20) contenus dans ledit au moins un câble ferromagnétique (2, 2') présentent une même forme et parcourent un même chemin de sorte à embrasser une même section dudit câble ferromagnétique (2, 2') afin qu'ils soient tous au même potentiel et qu'aucun courant ne circule d'un brin unitaire à l'autre.

26. Procédé de fabrication selon l'une quelconque des revendications 15 et 16, **caractérisé en ce que** l'on sertie lesdites bornes de raccordement (6) directement aux extrémités dudit câble ferromagnétique (2) pour connecter tous les brins unitaires (20, 11) en parallèle.

## Patentansprüche

1. Rückgewinnungsvorrichtung (1) für elektrische Energie, die mindestens ein ferromagnetisches Kabel (2, 2'), enthält, das spiralförmig um mindestens einem Abschnitt (3) eines Stromleiters (4) gewickelt ist, um so ein magnetisches System zu bilden, das das von einem durch diesen Stromleiter (4) fließenden Strom (I1) induzierte Magnetfeld auffangen kann, Mittel zur Erzeugung, ausgehend von diesem Magnetfeld, einer nutzbaren induzierten Spannung (U2), **dadurch gekennzeichnet, dass** dieses mindestens eine ferromagnetische Kabel (2, 2') aus einem Komplex von Einzeldrähten (20) aus ferromagnetisches Material besteht, die in Form einer Litze verbunden sind und die dazu ausgelegt sind, diesem ferromagnetischen Kabel (2, 2') Flexibilität in alle Richtungen zu verleihen, durch die es um diesen Stromleiter (4) gewickelt werden kann, ungeachtet des Durchmessers dieses Stromleiters und dass diese Mittel zur Erzeugung einer induzierte Spannung (U2) Bestandteil dieses mindestens einen ferromagnetischen Kabels (2, 2') sind.

2. Rückgewinnungsvorrichtung nach Anspruch 1, **dadurch gekennzeichnet, dass** diese Mittel (10) zur Erzeugung einer induzierte Spannung (U2) mindestens einen Einzeldraht (11) aus elektrisch leitendem Material enthalten, der mit diesen Einzeldrähten (20) aus ferromagnetischem Material verbunden ist, um dieses mindestens eine ferromagnetische Kabel (2) zu bilden, und dass dieser mindestens eine elektrisch leitende Einzeldraht (11) eine Wicklung bildet, in der diese induzierte Spannung (U2) erzeugt wird und dass er an seinen Enden Anschlussklemmen enthält, mit denen diese induzierte Spannung zurückgewonnen wird.

3. Rückgewinnungsvorrichtung nach Anspruch 1, **dadurch gekennzeichnet, dass** diese Mittel zur Erzeugung einer induzierte Spannung (U2) mit diesem mindestens einen ferromagnetischen Kabel (2, 2') vermengt werden, insoweit sich jeder Einzeldraht (20) aus ferromagnetischem Material wie eine Wicklung verhält, in der diese induzierte Spannung (U2) erzeugt wird und dass diese Einzeldrähte (20) einen Komplex aus Wicklungen bildet, die miteinander parallel durch Anschlussklemmen (6) verbunden sind, die an den Enden dieses mindestens einem ferromagnetischen Kabel (2, 2') befestigt sind und die eine Rückgewinnung dieser induzierten Spannung ermöglichen.

4. Rückgewinnungsvorrichtung nach irgendeinem der vorstehenden Ansprüche 2 und 3, **dadurch gekennzeichnet, dass** diese Einzeldrähte (20) in Zwischenlitzen (21) zusammengefasst sind und dass diese Zwischenlitzen (21) in einer Endlitze (22) zusammengefasst sind, die dieses mindestens eine ferromagnetische Kabel (2) bildet.

5. Rückgewinnungsvorrichtung nach Anspruch 4, **dadurch gekennzeichnet, dass** die erwähnten Einzeldrähte (20) und diese Zwischenlitzen (21) in derselben Drehrichtung verseilt sind.

6. Rückgewinnungsvorrichtung nach Anspruch 4, **dadurch gekennzeichnet, dass** die Gesamtzahl der Einzeldrähte (20), die dieses mindestens eine ferromagnetische Kabel (2, 2') bilden, ein Vielfaches von drei ist.

7. Rückgewinnungsvorrichtung nach Anspruch 1, **dadurch gekennzeichnet, dass** der Durchmesser der Einzeldrähte (20) kleiner als ein Millimeter ist, vorzugsweise kleiner als 0.5mm.

8. Rückgewinnungsvorrichtung nach Anspruch 1, **dadurch gekennzeichnet, dass** das ferromagnetische Material dieser Einzeldrähte (20) ein Material hoher relativer magnetischer Permeabilität ist, ausgewählt aus den Eisen-Nickel- Legierungen mit mindestens 70% Nickel, und vorzugsweise 78 bis 81% Nickel.

9. Rückgewinnungsvorrichtung nach Anspruch 1, **dadurch gekennzeichnet, dass** das ferromagnetische Material dieser Einzeldrähte (20) ein Material weniger hoher relativer magnetischer Permeabilität ist, jedoch mit einer magnetischen Sättigung von größer oder gleich 1,5 Tesla, ausgewählt aus den Eisen-Nickel- Legierungen mit höchstens 55% Nickel und den Eisenlegierungen.

10. Rückgewinnungsvorrichtung nach Anspruch 1, **dadurch gekennzeichnet, dass** die erwähnten Einzeldrähte (20) elektrisch voneinander isoliert sind.

11. Rückgewinnungsvorrichtung nach Anspruch 1, **dadurch gekennzeichnet, dass** die erwähnten Einzeldrähte (20) elektrisch nicht voneinander isoliert sind.

12. Rückgewinnungsvorrichtung nach Anspruch 11, **dadurch gekennzeichnet, dass** alle Einzeldrähte (20), die in diesem mindestens einen ferromagnetischen Kabel (2, 2') enthalten sind, dieselbe Form haben und denselben Pfad durchlaufen, so dass sie denselben Abschnitt dieses ferromagnetischen Kabels (2,2') umfassen, damit sie alle dasselbe Potential haben und damit kein Strom von einem Einzeldraht zum anderen fließt.

13. Rückgewinnungsvorrichtung nach irgendeinem der vorstehenden Ansprüche 2 und 3, **dadurch gekennzeichnet, dass** die erwähnten Anschlussklemmen (6) auf die Enden dieses ferromagnetischen Kabels (2) aufgepresst sind, um alle Einzeldrähte (20, 11) parallel zu verbinden.

14. Verfahren zur Herstellung einer Rückgewinnungsvorrichtung (1) für elektrische Energie nach irgendeinem der vorstehenden Ansprüche, wobei diese Vorrichtung mindestens ein ferromagnetisches Kabel (2, 2') enthält, dazu vorgesehen, spiralförmig um mindestens einem Abschnitt (3) eines Stromleiters (4) gewickelt zu werden, um so eine magnetische Vorrichtung zu bilden, die in der Lage ist, das von einem durch diesen Stromleiter (4) fließenden Strom (I1) induzierte Magnetfeld aufzufangen, und Mittel, um ausgehend von diesem Magnetfeld, eine nutzbare induzierte Spannung (U2), zu erzeugen, **dadurch gekennzeichnet, dass** dieses mindestens eine ferromagnetische Kabel (2, 2') aus einem Komplex von Einzeldrähten (20) aus ferromagnetisches Material hergestellt wird, durch ein Verseilungsverfahren, um diese Einzeldrähte (20) miteinander in Form einer Litze zu verbinden sind und dadurch dass diese Mittel bei der Fertigung integriert werden, um eine induzierte Spannung (U2) in diesem mindestens einen ferromagnetischen Kabels (2, 2') zu erzeugen.

15. Herstellungsverfahren nach Anspruch 14, **dadurch gekennzeichnet, dass** als Mittel (10) zur Erzeugung einer induzierten Spannung (U2) mindestens ein Einzeldraht (11) aus elektrisch leitendem Material benutzt wird, der durch dieses Verseilungsverfahren mit den erwähnten Einzeldrähten (20) aus ferromagnetischem Material verbunden ist, um dieses mindestens eine ferromagnetische Kabel (2) zu bilden, so dass dieser mindestens eine elektrisch leitende Einzeldraht (11) eine Wicklung bildet, in der diese induzierte Spannung (U2) induziert wird und die Enden dieses mindestens einen Einzeldrahts (11) mit Anschlussklemmen ausgerüstet sind, mit denen diese induzierte Spannung zurückgewonnen wird.

16. Herstellungsverfahren nach Anspruch 14, **dadurch gekennzeichnet, dass** als Mittel zur Erzeugung einer induzierte Spannung (U2) dieses mindestens eine ferromagnetische Kabel (2, 2') selbst verwendet wird, so dass jeder Einzeldraht (20) aus ferromagnetischem Material sich wie eine Wicklung verhält, in der diese induzierte Spannung (U2) induziert wird und dass dieser Komplex aus Einzeldrähten (20), der einen Komplex von Wicklungen bildet, parallel miteinander verbunden wird, durch Anschlussklemmen (6) die an den Enden dieses mindestens einem ferromagnetischen Kabels (2, 2') befestigt sind, und die eine Rückgewinnung dieser induzierten Spannung ermöglichen.

17. Herstellungsverfahren nach irgendeinem der vorstehenden Ansprüche 15 und 16, **dadurch gekennzeichnet, dass** diese Einzeldrähte durch ein Verseilungsverfahren miteinander zusammengeführt werden um Zwischenlitzen (21) zu bilden, und dass diese Zwischenlitzen (21) durch das erwähnte Verseilungsverfahren zusammengeführt werden, um eine Endlitze (22) zu bilden, die diesem mindestens einen ferromagnetischen Kabel (2) entspricht.

18. Herstellungsverfahren nach Anspruch 17, **dadurch gekennzeichnet, dass** diese Einzeldrähte (20) und diese Zwischenlitzen (21) in derselben Drehrichtung verseilt werden.

19. Herstellungsverfahren nach Anspruch 17, **dadurch gekennzeichnet, dass** eine Gesamtzahl an Einzeldrähten (20) verwendet wird, die ein Vielfaches von drei ist, um dieses mindestens eine ferromagnetische Kabel (2, 2') zu bilden.

20. Herstellungsverfahren nach Anspruch 14, **dadurch gekennzeichnet, dass** dünne Einzeldrähte (20) mit einem Durchmesser kleiner als ein Millimeter ausgewählt werden, vorzugsweise kleiner als 0.5mm.

21. Herstellungsverfahren nach Anspruch 14, **dadurch gekennzeichnet, dass** Einzeldrähte (20) aus einem Material hoher relativer magnetischer Permeabilität ausgewählt werden, ausgewählt aus den Eisen-Nickel- Legierungen mit mindestens 70% Nickel, und vorzugsweise 78 bis 81% Nickel.

22. Herstellungsverfahren nach Anspruch 14, **dadurch gekennzeichnet, dass** diese Einzeldrähte (20) aus einem Material weniger hoher relativer magnetischer Permeabilität bestehen, jedoch mit einer magnetischen Sättigung von größer oder gleich 1,5 Tesla, ausgewählt aus den Eisen-Nickel- Legierungen mit höchstens 55% Nickel und den Eisenlegierungen.

23. Herstellungsverfahren nach Anspruch 14, **dadurch gekennzeichnet, dass** Einzeldrähte (20) verwendet werden, die elektrisch voneinander isoliert sind.

24. Herstellungsverfahren nach Anspruch 14, **dadurch gekennzeichnet, dass** Einzeldrähte (20) verwendet werden, die elektrisch nicht voneinander isoliert sind.

25. Herstellungsverfahren nach Anspruch 24, **dadurch gekennzeichnet, dass** während des Verseilungsverfahrens die Einzeldrähte (20) in Beziehung zueinander positioniert werden, damit alle Einzeldrähte (20). die in diesem mindestens einen ferromagnetischen Kabel (2, 2') enthalten sind dieselbe Form haben und denselben Pfad durchlaufen, so dass sie denselben Abschnitt dieses ferromagnetischen Kabels (2, 2') umfassen, damit sie alle dasselbe Potential haben und kein Strom von einem Einzeldraht zum anderen fließt.

26. Herstellungsverfahren nach irgendeinem der vorstehenden Ansprüche 15 und 16, **dadurch gekennzeichnet, dass** die erwähnten Anschlussklemmen (6) auf die Enden dieses ferromagnetischen Kabels (2) aufgepresst sind, um alle Einzeldrähte (20, 11) parallel zu verbinden.

## Claims

1. Device (1) for recovering electrical energy, comprising at least one ferromagnetic cable (2, 2') which is helically wound around at least a portion (3) of a power conductor (4) in order to form a magnetic system which is capable of sensing the magnetic field induced by a current (I1) passing through said power conductor (4), and means for generating an induced voltage (U2) from this magnetic field which can be utilised, **characterised in that** said at least one ferromagnetic cable (2, 2') is constituted by an assembly of unitary strands (20) produced from ferromagnetic material, assembled in the form of a stranded wire and disposed to provide said ferromagnetic cable (2, 2') with flexibility in all directions, enabling it to be wound around said power conductor (4) whatever the diameter of said power conductor, and **in that** said means for generating an induced voltage (U2) form an integral part of said at least one ferromagnetic cable (2, 2').

2. Recovery device as claimed in claim 1, **characterised in that** said means (10) for generating an induced voltage (U2) comprise at least one unitary strand (11) produced from electrically conductive material assembled with said unitary strands (20) of ferromagnetic material in order to constitute said at least one ferromagnetic cable (2), and **in that** said at least one electrically conductive unitary strand (11) constitutes a winding in which said induced voltage (U2) is generated and comprises connecting terminals at its ends, making it possible to recover said induced voltage.

3. Recovery device as claimed in claim 1, **characterised in that** said means for generating an induced voltage (U2) coincide with said at least one ferromagnetic cable (2, 2'), **in that** each unitary strand (20) of ferromagnetic material behaves as a winding in which the said induced voltage (U2) is generated, and **in that** said unitary strands (20) form an assembly of windings connected in parallel by means of connecting terminals (6) fixed to the ends of said at least one ferromagnetic cable (2, 2'), making it possible to recover said induced voltage.

4. Recovery device as claimed in any one of claims 2 and 3, **characterised in that** said unitary strands (20) are assembled into intermediate stranded wires (21), and **in that** said intermediate stranded wires (21) are assembled into a final stranded wire (22) constituting said at least one ferromagnetic cable (2).

5. Recovery device as claimed in claim 4, **characterised in that** said unitary strands (20) and said intermediate stranded wires (21) are twisted in the same direction of rotation.

6. Recovery device as claimed in claim 4, **characterised in that** the total number of unitary strands (20) constituting said at least one ferromagnetic cable (2, 2') is a multiple of three.

7. Recovery device as claimed in claim 1, **characterised in that** the diameter of the unitary strands (20) is less than one millimetre, and preferably less than 0.5 mm.

8. Recovery device as claimed in claim 1, **characterised in that** the ferromagnetic material of said unitary strands (20) is a material with high relative magnetic permeability selected from iron-nickel alloys with at least 70% nickel, and preferably 78% to 81% nickel.

9. Recovery device as claimed in claim 1, **characterised in that** the ferromagnetic material of said unitary strands (20) is a material with a poorer relative magnetic permeability, but with an induction saturation of greater than or equal to 1.5 Tesla, selected from iron-nickel alloys with at most 55% nickel, and ironbased alloys.

10. Recovery device as claimed in claim 1, **characterised in that** said unitary strands (20) are electrically insulated from each other.

11. Recovery device as claimed in claim 1, **characterised in that** said unitary strands (20) are not electrically insulated from each other.

12. Recovery device as claimed in claim 11, **characterised in that** all of the unitary strands (20) contained in the said at least one ferromagnetic cable (2, 2') have the same shape and travel along the same path so as to embrace the same section of the said ferromagnetic cable (2, 2'), so that they are all at the same potential and no current flows from one unitary strand to the other.

13. Recovery device as claimed in any one of claims 2 and 3, **characterised in that** said connecting terminals (6) are crimped onto the ends of said ferromagnetic cable (2) in order to connect all the unitary strands (20, 11) in parallel.

14. Method for manufacturing an electrical energy recovery device (1) as claimed in any one of the preceding claims, said device comprising at least one ferromagnetic cable (2, 2'), disposed to be helically wound around at least a portion (3) of a power conductor (4) and form a magnetic device which is capable of sensing the magnetic field induced by a current (I1) passing through said power conductor (4), and means for generating a utilisable induced voltage (U2) from this magnetic field, **characterised in that** said at least one ferromagnetic cable (2, 2') is manufactured from an assembly of unitary strands (20) of ferromagnetic material by a twisting method for assembling said unitary strands (20) together into the form of a stranded wire, and **in that** said means for generating an induced voltage (U2) are integrated into said at least one ferromagnetic cable (2, 2') during its manufacture.

15. Manufacturing method as claimed in claim 14, **characterised in that** at least one unitary strand (11) of electrically conductive material is utilised as the means (10) for generating an induced voltage (U2), assembled by said twisting method with said unitary strands (20) produced from ferromagnetic material in order to constitute said at least one ferromagnetic cable (2), in a manner such that said at least one electrically conductive unitary strand (11) constitutes a winding in which said induced voltage (U2) is induced, and **in that** the ends of said at least one unitary strand (11) are equipped with connecting terminals enabling said induced voltage to be recovered.

16. Manufacturing method as claimed in claim 14, **characterised in that** said at least one ferromagnetic cable (2, 2') per se is utilised as the means for generating an induced voltage (U2), in a manner such that each unitary strand (20) of ferromagnetic material behaves as a winding in which said induced voltage (U2) is induced, and **in that** all of said unitary strands (20) forming an assembly of windings are connected in parallel by means of connecting terminals (6) added to the ends of said at least one ferromagnetic cable (2, 2'), making it possible to recover said induced voltage.

17. Manufacturing method as claimed in any one of claims 15 and 16, **characterised in that** said unitary strands (20) are assembled by means of said twisting method in order to form intermediate stranded wires (21), and **in that** said intermediate stranded wires (21) are assembled by said twisting method in order to form a final stranded wire (22) corresponding to said at least one ferromagnetic cable (2).

18. Manufacturing method as claimed in claim 17, **characterised in that** said unitary strands (20) and said intermediate stranded wires (21) are twisted in the same direction of rotation.

19. Manufacturing method as claimed in claim 17, **characterised in that** a total number of unitary strands (20) which is a multiple of three is used in order to manufacture said at least one ferromagnetic cable (2, 2').

20. Manufacturing method as claimed in claim 14, **characterised in that** fine unitary strands (20) with a diameter of less than one millimetre, and preferably less than 0.5 mm, are selected.

21. Manufacturing method as claimed in claim 14, **characterised in that** unitary strands (20) are used which are constituted by a material with high relative magnetic permeability selected from iron-nickel alloys with at least 70% nickel, and preferably 78% to 81% nickel.

22. Manufacturing method as claimed in claim 14, **characterised in that** unitary strands (20) are used which are constituted by a material with a lower relative magnetic permeability, but with an induction saturation of greater than or equal to 1.5 Tesla, selected from iron-nickel alloys with at most 55% nickel, and ironbased alloys.

23. Manufacturing method as claimed in claim 14, **characterised in that** unitary strands (20) are used which are electrically insulated from each other.

24. Manufacturing method as claimed in claim 14, **characterised in that** bare unitary strands (20) are used which are not electrically insulated from each other.

25. Manufacturing method as claimed in claim 24, **characterised in that**, in the twisting method, the unitary strands (20) are positioned with respect to each other so that all the unitary strands (20) contained in said at least one ferromagnetic cable (2, 2') have a same shape and travel the same path so as to embrace the same section of said ferromagnetic cable (2, 2'), so that they are all at the same potential and so that no current flows from one unitary strand to the other.

26. Manufacturing method as claimed in any of claims 15 and 16, **characterised in that** said connecting terminals (6) are crimped directly onto the ends of said ferromagnetic cable (2) in order to connect all of the unitary strands (20, 11) in parallel.
